# EUROPÄISCHE PATENTANMELDUNG

(11) **EP 2 290 160 A1**
(43) Veröffentlichungstag der Anmeldung: **02.03.2011**
(21) Anmeldenummer: 10175598.1
(22) Anmeldetag: 08.01.2008
(51) Int. Cl.: D21D 5/16, B07B 1/46

(54) **Verfahren zur Herstellung eines Siebes, insbesondere eines starren Siebes für die Behandlung von zur Papiererzeugung geeigneten Faserstoffsuspensionen**

(30) Priorität: 30.04.2007 DE 102007020325
(62) Teilanmeldung aus: 08701301.7
(71) Anmelder: Voith Patent GmbH, 89520 Heidenheim (DE)
(72) Erfinder: Brettschneider, Werner, 88214 Ravensburg (DE); Reinhold, Roland, 88213 Ravensburg (DE); Gindele, Wolfgang, 88281 Schlier (DE)

(57) **Zusammenfassung**

Das Verfahren dient zur Herstellung eines Siebes (1), wie es z.B. bei der Sortierung von zur Papiererzeugung geeigneten Faserstoffsuspensionen eingesetzt wird. Es enthält mindestens zwei mit Öffnungen versehene flächig miteinander verbundene Siebschichten (2, 3, 4). Die Öffnungen werden vor dem Verbinden der Siebschichten in diese eingebracht. Sie sind so ausgestaltet und angeordnet, dass Sieböffnungen (7, 8) entstehen, die durch alle Siebschichten (2, 3, 4) hindurchgehen.

## Beschreibung

Die Erfindung betrifft ein Verfahren zur Herstellung eines Siebes gemäß Oberbegriff des Anspruchs 1.

Siebe, die in einem Verfahren nach Art der Erfindung hergestellt werden, werden vorzugsweise zur Nasssiebung von Faserstoffsuspensionen verwendet, um darin vorhandene Störstoffe zu entfernen. Sie sind in der Regel starr und unterscheiden sich dadurch von flexiblen Endlossieben, die in Siebpressen und Papiermaschinen verwendet werden. Die Charakteristik eines solchen Siebes ergibt sich im Wesentlichen aus Größe, Form und Anzahl der sich darin befindenden Öffnungen. Diese werden in der Regel kleiner gehalten als die auszusiebenden Stoffe. Verwendet werden solche Siebe mit Vorteil z.B. in Stofflösern, Sekundärstofflösern und Sortierern zur Aufbereitung von Papierfasersuspensionen, wobei sie die Aufgabe haben, Störstoffe zurückzuhalten. Für Anwendungsfälle, die sich besonders in der Papier- und Zellstoffindustrie ergeben, sollen derartige Siebe eine Sortiercharakteristik haben, die z.B. durch runde Öffnungen zwischen 1 und 30 mm, je nach Grobheit der Stoffe, erreichbar ist. Natürlich ist man auch bestrebt, durch derartige Siebe einen möglichst großen Durchsatz zu ermöglichen, d.h. eine möglichst große Menge von nicht abgewiesenen Stoffen soll die Öffnungen passieren. Das lässt sich dadurch fördern, dass möglichst viele Öffnungen vorhanden sind. Gesamthaft ausgedrückt, bemüht man sich um eine möglichst große freie Siebfläche, bezogen auf die gesamte Oberfläche des Siebelementes.

Eine weitere Forderung ist eine relativ hohe Festigkeit gegen hydraulischen Druck. Solche Siebelemente werden in einem Produktionsbetrieb eingesetzt, bei dem es auch einmal zu Störungen kommt, was zu unterschiedlicher und beträchtlicher Druckbelastung der Siebelemente führt. Da sich eine Verstopfung nicht immer ausschließen lässt, können durchaus hohe Drücke und bei den entsprechend großen Flächen auch hohe Kräfte auf die Oberfläche solcher Siebelemente wirken. Diese erhöhten Kräfte müssen durch das Sieb aufgenommen werden können, ohne dass eine Beschädigung eintritt.

Siebelemente der genannten Art sind aus hochwertigem Material und aufwändig zu fertigen, so dass es ein ständiges Bestreben ist, die Fertigungskosten durch entsprechend gute Herstellungsverfahren zu senken. In der DE 195 47 585 A1 wird ein Feinsieb beschrieben, das aus zwei Schichten, einer Stützschicht und einer Sortierschicht, besteht, bei dem das Problem der Festigkeit durch eine relativ starke Stützschicht gelöst wurde. Das führt zwar zum Erfolg, ist aber technologisch oft nicht optimal.

Es gibt andere Herstellungsverfahren von Siebelementen, bei denen ein feines Siebgewebe auf einem mit relativ großen Löchern versehenen zylindrischen Stützkörper von außen aufgeschrumpft wird. Auch bei derartigen Siebelementen ist ein verstopfungsfreier Betrieb schwierig und die Sortiercharakteristik für viele Anwendungsfälle nicht ausreichend gut.

Der Erfindung liegt die Aufgabe zu Grunde, ein Verfahren zur Herstellung von Siebelementen zu schaffen, das, gemessen an dem Gebrauchswert des Siebelementes, relativ kostengünstig ist und eine optimale Sortiercharakteristik, insbesondere bei der Sortierung von Faserstoffsuspensionen, gewährleistet.

Diese Aufgabe wird durch die im Kennzeichen des Anspruchs 1 genannten Merkmale in vollem Umfang gelöst.

Siebe, die zur Behandlung von Faserstoffsuspensionen verwendet werden sollen, müssen aus Festigkeitsgründen eine ausreichende Wandstärke (Dicke) haben. Das erfindungsgemäße Verfahren, bei dem die Siebe aus mehreren Schichten hergestellt werden, bietet einen grundsätzlichen ökonomischen Vorteil in der Herstellung. In aller Regel erfordert es weniger Aufwand, Löcher oder sonstige Sieböffnungen in dünnere Metallschichten einzubringen als in dicke. Insbesondere bei dem hier besonders typischen Größenbereich für die Sieböffnungen, der z.B. zwischen 1 und 20 Millimeter liegt, können besonders günstige Verfahren, wie Stanzen oder Laserschneiden, eingesetzt werden. Das verursacht in der Regel weniger Kosten als sie beim Bohren entstehen. Weitere Verfahren zur Erzeugung der Öffnungen in den Siebschichten sind: Fräsen, Wasserstrahlschneiden, Ätzen, Erodieren, elektrochemisches Bohren, Fließlochformen oder Räumen. Mit dem erfindungsgemäßen Verfahren lassen sich leicht Sieböffnungen erzeugen, deren Querschnitte nicht rotationssymmetrisch sind: Z.B. Langlöcher, Rechtecke, Rauten, Sechsecke oder sonstige Polygone mit abgerundeten Ecken. Das kann bei der Nasssiebung von Faserstoffsuspensionen besondere Vorteile bieten.

Bei vielen Anwendungen der nach dem erfindungsgemäßen Verfahren hergestellten Siebe ist es von Vorteil, dass sich die Sieböffnungen in Durchströmrichtung der zu siebenden Flüssigkeit erweitern. Eine solche Ausführungsform lässt sich mit dem erfindungsgemäßen Verfahren praktisch ohne Mehrkosten dadurch erzeugen, dass die Öffnungen in den stromabwärtigen Siebschichten (in Durchströmungsrichtung gesehen) größer sind als in der jeweils stromaufwärtigen. Das kann bei zylindrischen Löchern oder auch bei davon abweichenden Querschnitten durchgeführt werden. Eine spezielle Möglichkeit ergibt sich durch die Stanztechnik, bei der aus Herstellungsgründen ohnehin eine von der zylindrischen Form abweichende Lochform entsteht. Damit ist gemeint, dass die Innenwände der Öffnungen nicht zueinander parallel, sondern mit einem spitzen Winkel zueinander stehen, der in der Regel zwischen 1 und 3° liegt. Bei diesbezüglich sinnvoller Anordnung der einzelnen Siebschichten kann also diese Strömungsquerschnittserweiterung in Richtung der beabsichtigten Durchströmung der zu bearbeitenden Flüssigkeit gewählt werden.

Darüber hinaus gibt es eine Reihe von vorteilhaften Ausführungsformen des Verfahrens, die es gestatten, mit geringem Aufwand auch solche Sieböffnungen zu erzeugen, deren Verlauf im Sieb speziell ausgestaltet ist. Es besteht nämlich die Möglichkeit, durch Unsymmetrie und/oder einen seitlichen Versatz der Öffnungen in den verschiedenen Siebschichten eine Schrägstellung der Sieböffnungen zu erreichen, d.h. dass deren Hauptrichtung nicht senkrecht zur Siebebene steht. Diese Schrägstellung kann mit Vorteil auf die Anströmungsrichtung der Flüssigkeit beim Betrieb des Siebes abgestimmt werden. Auch in den Fällen, in denen kein Versatz vorgesehen ist, können unterschiedliche Formen der Öffnungen in unterschiedlichen Siebschichten zu einer sehr variantenreichen Gestaltung der Strömungsquerschnitte in den Sieböffnungen genutzt werden. So können z.B. runde und eckige Bereiche aufeinander folgen. Es können auch sprunghafte Erweiterungen gebildet werden zur verbesserten Freihaltung der Sieböffnungen.

Gerade die spezielle Ausgestaltung der Sieböffnungen, über deren Verlauf im Sieb gesehen, lässt sich bei der Wahl einer größeren Anzahl von Siebschichten, also deutlicher mehr als 3, z.B. 6 bis 8 Siebschichten, sehr gut durchführen. Dann bestehen die einzelnen Siebschichten aus dünnen Blechen (z.B. 2 mm), die durch Stanzen, Laserschneiden oder andere Verfahren mit Öffnungen versehen werden.

Es ist also davon auszugehen, dass durch feinere Unterteilung des Siebes in einzelne Siebschichten die Möglichkeiten immer besser werden, kompliziertere Formen der Sieböffnungen zu erzeugen.

Die Siebschichten werden z.B. aus Metall, Kunststoff, Hartschaum oder Naturbaustoffen hergestellt. Dabei ist wegen der unterschiedlichen Beanspruchung einzelner Siebschichten eine Kombination verschiedener Werkstoffe von Vorteil, z.B. besonders abriebfestes Material in der zulaufseitigen Siebschicht (Oberschicht) und besonders zähes Material in den Mittelschichten und/oder der Unterschicht.

In speziellen Ausführungsformen kann es auch gewünscht werden, dass das nach dem Verfahren hergestellte Sieb mit Blindlöchern versehen wird, was natürlich ohne großen Aufwand durch das neue Herstellungsverfahren erreicht werden kann, indem sich an bestimmten Stellen der entsprechenden Siebschicht keine Öffnung befindet.

Da - wie bereits erwähnt - das nach dem Verfahren hergestellte Sieb in der Regel hohen Kräften ausgesetzt ist, empfiehlt es sich, die einzelnen Siebschichten durch ein Verfahren zu verbinden, bei dem entsprechend große Kräfte aufgenommen werden können. Solche Verfahren sind insbesondere Lötverfahren, also Weichlöten, Hartlöten oder Hochtemperaturlöten, da diese eine hochfeste, flächige Verbindung erzeugen und thermisch relativ unproblematisch sind. Selbstverständlich kann eine solche Verbindung durch Schweißen zu erzeugt werden, wenn entsprechende Maßnahmen getroffen werden, die den Verzug des Siebes verhindern. Eine weitere Möglichkeit besteht in technischen Klebeverfahren. Bekanntlich gelingt es inzwischen, Metalle oder Kunststoffe mit solchen Klebeverfahren zu verbinden, die eine hohe Festigkeit gewährleisten. Da solche Siebe im Allgemeinen bei Temperaturen deutlich unter 100° C eingesetzt werden, ist die thermische Belastung solcher Klebeverbindungen bei Betrieb des Siebes gering.

Es ist in anderen Fällen von Vorteil, die Verbindung der Siebschichten miteinander lösbar zu gestalten, um die Möglichkeit zu haben, verschlissene Teile einfach auszuwechseln. Lösbare Verbindungen werden z.B. durch Schrauben, Nieten, Klemmen oder Formschluss gebildet, um nur diese zu nennen. Bei mehr als drei Siebschichten können diese teils lösbar und teils unlösbar miteinander verbunden sein, was die Möglichkeit bietet, nur die dem Verschleiß besonders ausgesetzte zulaufseitige Schicht (Oberschicht) zur Auswechslung vorzusehen.

Bei besonderen Ausführungen des erfindungsgemäßen Verfahrens kann die für Siebcharakteristik entscheidende zulaufseitige Siebschicht (Oberschicht) relativ dünn gehalten werden, wobei dennoch durch eine entsprechend robust ausgeführte weitere Schicht oder weitere Schichten ein Sieb von hoher Festigkeit entsteht. Die Möglichkeit, eine dünne Oberschicht verwenden zu können, hat ferner den Vorteil eines geringeren Druckverlustes beim Betrieb, da beim fertigen Sieb innerhalb der den Siebcharakter bestimmenden Öffnungen der Oberschicht nur kurze Strömungswege entstehen. Die Länge dieses Strömungsweges entspricht der Dicke der Oberschicht. Auch wenn eine konische Erweiterung der Sieböffnungen in der beabsichtigten Strömungsrichtung erforderlich ist, ist die Herstellung dennoch einfacher als bei einteiligen Sieben.

Typischerweise dient das Verfahren dazu, ebene Siebe herzustellen. Ein solches Sieb kann die Form eines Kreisringes haben, der eventuell aus Kreisringsegmenten zusammengesetzt wird. Wird in speziellen Fällen ein Sieb als zylindrischer Siebkorb hergestellt, bei dem die zulaufseitige Siebschicht radial innen ist und weitere Schichten außen sind, kann die zulaufseitige Schicht im ebenen Zustand mit den Öffnungen versehen werden. Wird sie anschließend gebogen, weiten sich in Folge der Biegung die Öffnungen, radial betrachtet, von innen nach außen auf. So entstehen durch besondere Fertigungsverfahren in der Sortierschicht konische Öffnungen, indem sich die Strömungsquerschnitte erweitern.

Die Erfindung und ihre Vorteile werden erläutert an Hand von Zeichnungen. Dabei zeigen
- Fig. 1:: Ein Teil eines nach dem Verfahren hergestellten Siebes, geschnitten dargestellt;
- Fig. 2-6: verschiedene Varianten am Beispiel verschiedener Siebe, geschnitten dargestellt;
- Fig. 7-8: je ein nach dem Verfahren hergestelltes Siebteil in Ansicht auf die Abströmseite;
- Fig. 9: ein nach dem Verfahren hergestelltes Sieb mit Ringen aus unterschiedlichem Material.

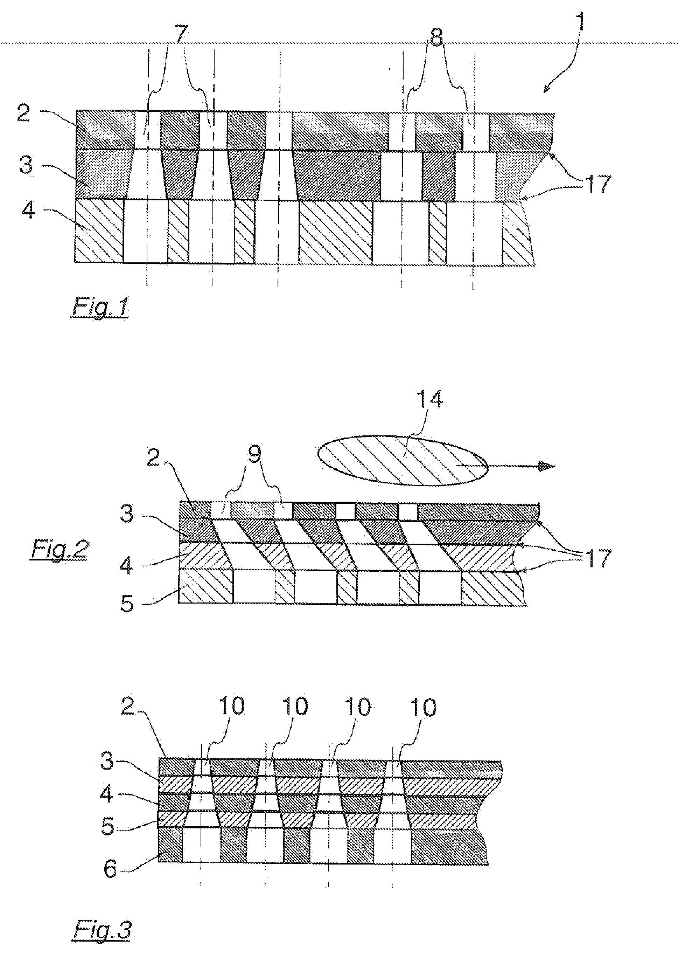

Fig. 1 zeigt an Hand eines ersten Beispiels ein nach dem erfindungsgemäßen Verfahren hergestelltes Sieb 1. Dieses besteht aus den drei flächig miteinander verbundenen Siebschichten 2, 3 und 4 sowie Sieböffnungen 7 bzw. 8, die bei diesem Beispiel durch alle Siebschichten hindurchgehen. Die Siebschichten sind an den Kontaktflächen 17 flächig miteinander verbunden, z.B. durch Hochtemperaturlöten. Bei dem hier dargestellten Sieb 1 bildet die oben liegende Siebschicht 2 die Zulaufseite, d.h. dass die zu siebende Flüssigkeit von oben nach unten durch die Öffnungen 7 bzw. 8 fließt. Dabei ist in dieser Durchströmrichtung des Siebes gesehen die stromabwärtige Öffnung größer als die jeweils stromaufwärtige Öffnung. D.h. in der Durchströmrichtung des Siebes werden die Querschnitte an bestimmten Stellen größer, wodurch sich eine besonders gute Verstopfungsfreiheit des Siebes ergibt. Während die rechts gezeichneten Sieböffnungen 8 im Wesentlichen zylindrisch sind, setzen sich die links gezeichneten Sieböffnungen 7 aus einer Kombination von zwei Zylindern und in einer dazwischen liegenden konischen Öffnung (Siebschicht 3) zusammen. Auch wenn die Öffnungen 7 und 8 hier im selben Sieb eingezeichnet sind, ist das eher als Ausnahme anzusehen. Meistens sind die Sieböffnungen untereinander gleich. Dasselbe gilt auch für die anderen Figuren.

Bei den typischen Anwendungsfällen für das erfindungsgemäß hergestellte Sieb liegen die kleinsten Öffnungen an der Zulaufseite des Siebes 1 (also hier in der obersten Siebschicht 2) verglichen mit denen in stromabwärts folgenden Siebschichten. Dabei bestimmen diese kleinsten Öffnungen die Trenncharakteristik, d.h. welche Teile das Sieb passieren oder davor abgewiesen werden. Durch die Erfindung ist es leicht möglich, nicht nur die Größe, sondern auch die Form der kleinsten Öffnung auf die Anforderungen einzustellen. Solche Formen können z.B. Kreise, Ovale, Langlöcher, Rechtecke oder Polygone sein, um nur diese zu nennen. Durch eine entsprechend günstig gewählte Form und Anordnung ("Siebmuster") lässt sich eine große freie Fläche, bezogen auf die gesamte Siebfläche erzeugen.

Das in Fig. 2 gezeigte vierschichtige Sieb weist in den Mittelschichten 3 und 4 jeweils schräge und in der unten eingezeichneten Siebschicht 5 zylindrische Öffnungen auf, die gegenüber den stromaufwärtigen Öffnungen einen seitlichen Versatz haben. Eine solche Form der Sieböffnungen lässt sich mit Hilfe des erfindungsgemäßen Verfahrens relativ einfach realisieren und hat den Vorteil, dass bei schräger Anströmung der zu siebenden Flüssigkeit ein besserer Durchfluss möglich ist. Die schräge Anströmung rührt in der Regel daher, dass mit Hilfe eines am Sieb vorbei (in Pfeilrichtung) bewegten Siebräumers 14 (Räumrotors) eine schräge Geschwindigkeitsrichtung erzeugt wird, die also nicht senkrecht zur Siebebene steht. Außerdem kann auch auf Grund der Gehäuseform die Strömung schräg auftreffen.

In Fig. 3 ist ein Sieb mit insgesamt fünf Schichten dargestellt, deren Öffnungen 10 in mehreren Fällen leicht konisch ausgeführt sind. Dabei kann die Konizität vom Stanzvorgang, also dem Einbringen der Öffnungen in die Siebschichten kommen, was bekanntlich dazu führt, dass die Seitenwände nicht parallel, sondern in einem spitzen Winkel zueinander stehen. Diese Konizität ist in der Fig. 3 übertrieben dargestellt.

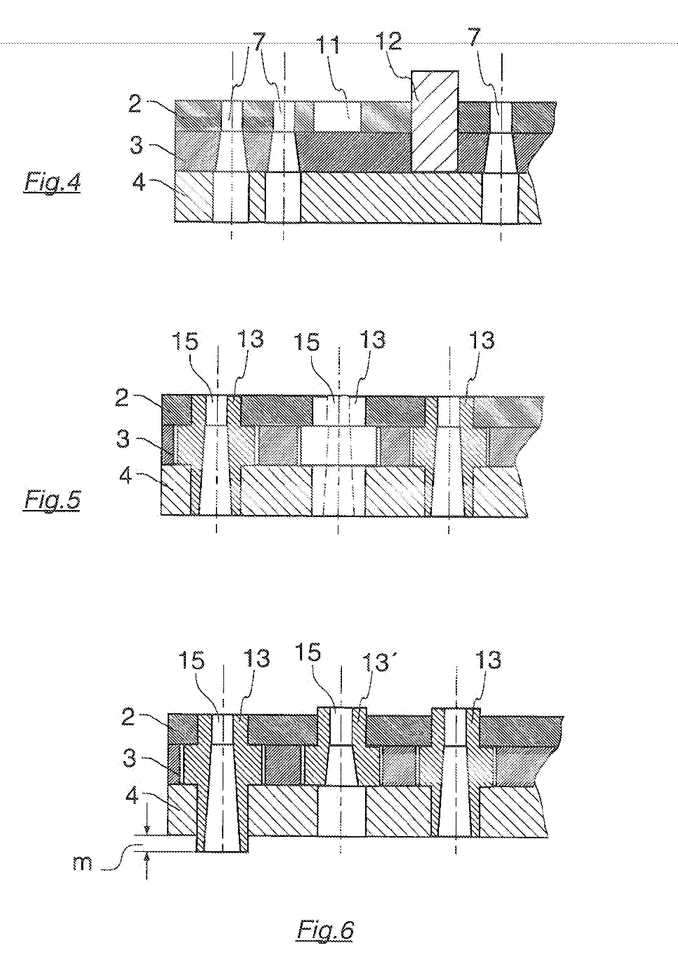

Das erfindungsgemäße Verfahren macht es auch sehr einfach, ein Sieb mit nicht durchgehenden Vertiefungen 11 zu versehen, wie es in Fig. 4 gezeigt ist. Eine solche Vertiefung 11 entsteht dadurch, dass die betreffende Öffnung nicht durch alle Siebschichten verläuft, sondern z.B. nur durch die zulaufseitige Siebschicht 2. Sie kann z.B. rund oder nutförmig sein. Ferner zeigt Fig. 4 einen leistenförmigen Vorsprung, der durch den Einschluss eines Profilstabes 12 gebildet wird. Dieser ist in eine passende Ausnehmung, die durch eine oder mehrere Siebschichten (hier z.B. 2 + 3) verläuft, eingesetzt, z.B. eingelötet. Vertiefungen oder Vorsprünge an der Zulaufseite des Siebes sind geeignet, die Strömung der zu siebenden Flüssigkeit so zu beeinflussen, dass die Verstopfungsneigung der benachbarten Sieböffnungen abnimmt.

Es kann auch ohne weiteres eine Ausführungsform hergestellt werden, bei der Einsätze 13 verwendet werden, die in ihrer Mitte durchgehende Sieböffnungen 15 haben und in mehrere oder alle Siebschichten 2, 3, 4 eingesetzt sind. Solche Einsätze 13 können besonders verschleißfest ausgeführt werden und sind eventuell auswechselbar (s. Fig. 5).

Weitere Varianten bei der Verwendung von Einsätzen 13 mit geeigneten Sieböffnungen 15 werden in Fig. 6 dargestellt. Bei bestimmten Einsatzfällen der erfindungsgemäß hergestellten Siebe kann es von Vorteil sein, die Einsätze 13 auf der Zulaufseite und/oder auf der Ablaufseite um ein gewisses Maß m vorstehen zu lassen, um dadurch z.B. die Strömung in diesem Bereich zu verbessern. Dieses Maß m liegt zweckmäßigerweise zwischen 0,5 und 5 mm. Der in der Mitte dieser Fig. 6 gezeigte Einsatz 13' erstreckt sich nicht durch alle Siebschichten, sondern nur durch die oberen Siebschichten 2 und 3. Auf diese Weise können die verschleißgefährdeten Teile des Siebes, also die Einsätze 13', kleiner gehalten werden. Wie bereits erwähnt, ist der Verschleiß in dem Bereich besonders hoch, wo der Siebräumer 14 eingesetzt wird. Die dargestellte Form des über zwei Siebschichten sich erstreckenden Einsatzes 13' ist besonders leicht auszuwechseln, wenn dafür gesorgt wird, dass sich die beiden Siebschichten 2 und 3 zerstörungsfrei trennen lassen. Das gilt auch für Einsätze ohne Überstand.

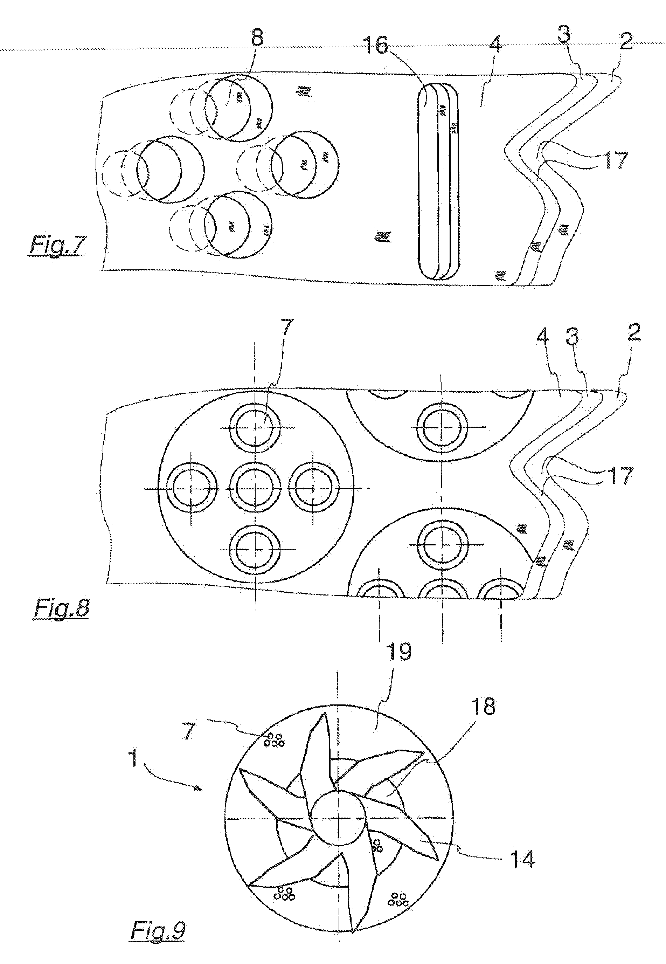

Eine Ansicht der Abströmungsseite eines erfindungsgemäß hergestellten Siebes zeigt Fig. 7. Dabei handelt es sich um eine Teilansicht, die insgesamt aus drei Siebschichten 2, 3, 4 besteht, zwischen denen sich die Kontaktflächen 17 befinden. Die links dargestellten Sieböffnungen 8 haben jeweils einen zylindrischen Querschnitt, dessen Durchmesser in den verschiedenen Siebschichten unterschiedlich ist. Dabei sind die Öffnungen in den einzelnen Siebschichten gegeneinander versetzt, so dass sich eine schräge Durchströmungsrichtung ergibt. Einen ähnlichen Versatz hat auch die Sieböffnung 16, deren Strömungsquerschnitt die Form eines Langlochs hat.

Entscheidend für die Siebcharakteristik des erfindungsgemäß hergestellten Siebes sind die kleinsten Öffnungen, die üblicherweise an der Zulaufseite, also bei den in den Figuren dargestellten Beispielen in der Siebschicht 2 vorhanden sind. Die weiteren Siebschichten, also z.B. 3 und 4 in den Fig. 1 und 4 bis 6, haben im Wesentlichen die Aufgabe, dem so hergestellten Sieb die notwendige Festigkeit zu geben, worauf bereits eingegangen wurde. Es ist also ohne weiteres möglich, wie in Fig. 8 dargestellt, Öffnungen in der unteren Siebschicht 4 anzubringen, die so groß sind, dass in diese mehrere Öffnungen von einer anderen Siebschicht einmünden. Dabei ist es im Allgemeinen zweckmäßig, dass eine solche größere Öffnung etwa 3 bis 15 kleinere Öffnungen überdeckt. Diese Maßnahme kann auch bei anderen Siebschichten getroffen werden, ausgenommen der oberen Siebschicht 2.

Ein weiterer Vorteil des erfindungsgemäßen Herstellungsverfahrens liegt in der Möglichkeit, dass mindestens eine Siebschicht, insbesondere die zulaufseitige Siebschicht 2, in mehrere, vorzugsweise konzentrische Kreisringe 18, 19 aufgeteilt wird und dass diese Kreisringe 18, 19 aus verschiedenem Material hergestellt sind (Fig. 9). Dadurch kann der Tatsache Rechnung getragen werden, dass in Folge der höheren Umfangsgeschwindigkeit des Siebräumers 14 in radial äußeren Bereichen dort auch eine höhere Verschleißgefahr besteht. Ein radial äußerer Siebring 19 kann dann z.B. aus einem besonders hochwertigen verschleißfesten Material bestehen, während der radial weiter innen liegende Siebring 18 entsprechend preiswerter ausgeführt werden kann mit dem Vorteil, dass trotz reduzierter Herstellungskosten das Verschleißverhalten des gesamten Siebes 1 nicht schlechter wird.

## Patentansprüche

1. Verfahren zur Herstellung eines Siebes, insbesondere eines starren Siebes (1) für die Behandlung von zur Papiererzeugung geeigneten Faserstoffsuspensionen, welches aus mindestens zwei mit Öffnungen versehenen flächig miteinander verbundenen Siebschichten (2, 3, 4, 5, 6) besteht, wobei zumindest ein Teil der Öffnungen so gestaltet und angeordnet ist, dass Sieböffnungen (7, 8, 9, 10, 15, 16) entstehen, die durch alle Siebschichten (2, 3, 4, 5, 6) hindurchgehen und die Öffnungen vor dem Verbinden der Siebschichten (2, 3, 4, 5, 6) in die Siebschichten (2, 3, 4, 5, 6) eingebracht werden,
**dadurch gekennzeichnet,**
**dass** die alle Siebschichten durchdringenden Sieböffnungen (7, 8, 9, 10, 15, 16) mit nicht konstanten Strömungsquerschnitten gebildet werden und zumindest in einer der verschiedenen Siebschichten (2, 3, 4, 5, 6) Öffnungen mit langlochförmigem Querschnitt und / oder zumindest in einer der verschiedenen Siebschichten (2,3,4,5,6) Öffnungen mit polygonförmigem Querschnitt eingebracht werden.

2. Verfahren nach Anspruch 1,
**dadurch gekennzeichnet,**
**dass** genau drei Siebschichten (2, 3, 4) verwendet werden.

3. Verfahren nach Anspruch 1,
**dadurch gekennzeichnet,**
**dass** genau vier Siebschichten (2, 3, 4, 5) verwendet werden.

4. Verfahren nach Anspruch 1,
**dadurch gekennzeichnet,**
**dass** mehr als vier Siebschichten (2, 3, 4, 5, 6) verwendet werden.

5. Verfahren nach einem der vorhergehenden Ansprüche,
**dadurch gekennzeichnet,**
**dass** die Strömungsquerschnitte der Öffnungen in mindestens zwei verschiedenen Siebschichten (2, 3, 4, 5, 6) unterschiedlich groß sind.

6. Verfahren nach Anspruch 5,
**dadurch gekennzeichnet,**
**dass** die Öffnungen in den verschiedenen Siebschichten (3, 4, 5, 6) stromabwärts in der beabsichtigten Durchströmrichtung des Siebes gesehen größer als die jeweils stromaufwärtige Öffnung dimensioniert werden.

7. Verfahren nach einem der voran stehenden Ansprüche,
**dadurch gekennzeichnet,**
**dass** die einzelnen Öffnungen in verschiedenen Siebschichten (2, 3, 4, 5, 6) miteinander fluchten.

8. Verfahren nach einem der Ansprüche 1 bis 6,
**dadurch gekennzeichnet,**
**dass** die einzelnen Öffnungen in den verschiedenen Siebschichten (2, 3, 4, 5, 6) zumindest teilweise nicht miteinander fluchten, indem sie seitlich versetzt zueinander angeordnet sind.

9. Verfahren nach einem der voran stehenden Ansprüche,
**dadurch gekennzeichnet,**
**dass** zumindest in einem Teil der Siebschichten (2, 3, 4, 5, 6) zylindrische Öffnungen eingebracht werden.

10. Verfahren nach einem der voran stehenden Ansprüche,
**dadurch gekennzeichnet,**
**dass** zumindest in einem Teil der Siebschichten (2, 3, 4, 5, 6) konische Öffnungen eingebracht werden.

11. Verfahren nach einem der voran stehenden Ansprüche,
**dadurch gekennzeichnet,**
**dass** die Siebschichten (2, 3, 4, 5, 6) zumindest teilweise aus Metall hergestellt werden.

12. Verfahren nach einem der voran stehenden Ansprüche,
**dadurch gekennzeichnet,**
**dass** die Siebschichten (2, 3, 4, 5, 6) zumindest teilweise aus Kunststoff hergestellt werden.

13. Verfahren nach einem der voran stehenden Ansprüche,
**dadurch gekennzeichnet,**
**dass** verschiedene Siebschichten (2,3, 4, 5, 6) aus verschiedenen Werkstoffen, insbesondere aus einer Kombination von Metallen und Kunststoff hergestellt werden.

14. Verfahren nach Anspruch 13,
**dadurch gekennzeichnet,**
**dass** die zulaufseitige Siebschicht (2) aus Metall hergestellt wird.

15. Verfahren nach einem der voran stehenden Ansprüche,
**dadurch gekennzeichnet,**
**dass** mindestens zwei der Siebschichten (2, 3, 4, 5, 6) aus Metall hergestellt werden und dass die flächige Verbindung zwischen ihnen durch Löten erfolgt.

16. Verfahren nach Anspruch 15,
**dadurch gekennzeichnet,**
**dass** das Lötverfahren ein Hochtemperaturlötverfahren ist, das bei einer Temperatur von über 800° C, vorzugsweise zwischen 950° C und 1250° C, durchgeführt wird.

17. Verfahren nach Anspruch 15 oder 16,
**dadurch gekennzeichnet,**
**dass** das Lötmittel in Form einer Folie vor dem Löten zwischen die Siebschichten eingebracht wird.

18. Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Schweißen erfolgt.

19. Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Kleben erfolgt.

20. Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Schrauben erfolgt.

21. Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Klemmen erfolgt.

22. Verfahren nach einem der voran stehenden Ansprüche,
**dadurch gekennzeichnet,**
**dass** die flächige Verbindung benachbarter Siebschichten (2, 3, 4, 5, 6) zumindest teilweise durch eine formschlüssige Verbindung erfolgt.

23. Verfahren nach einem der voran stehenden Ansprüche,
**dadurch gekennzeichnet,**
**dass** die einzelnen Siebschichten (2, 3, 4, 5, 6) jeweils eine Dicke zwischen 1 und 20 mm aufweisen.

24. Verfahren nach Anspruch 23,
**dadurch gekennzeichnet,**
**dass** die einzelnen Siebschichten (2, 3, 4, 5, 6) eine Dicke zwischen 1 und 5 mm aufweisen.

25. Verfahren nach einem der voran stehenden Ansprüche,
**dadurch gekennzeichnet,**
**dass** das Sieb (1) eine Gesamtdicke zwischen 4 und 100 mm, vorzugsweise 10 und 50 mm aufweist.

26. Verfahren nach einem der voran stehenden Ansprüche,
**dadurch gekennzeichnet,**
**dass** Sieböffnungen (7, 8, 9, 10, 15, 16) gebildet werden, die an ihrer engsten Stelle kreisförmig mit einem Durchmesser zwischen 1 mm und 20 mm, vorzugsweise zwischen 2 mm und 6 mm sind.

27. Verfahren nach einem der Ansprüche 1 bis 25,
**dadurch gekennzeichnet,**
**dass** Sieböffnungen (7, 8, 9, 10, 15, 16) gebildet werden, die an ihrer engsten Stelle Langlöcher sind, mit einer Weite zwischen 1 mm und 20 mm, vorzugsweise zwischen 2 mm und 6 mm.

28. Verfahren nach einem der Ansprüche 1 bis 25,
**dadurch gekennzeichnet,**
**dass** Sieböffnungen (7, 8, 9, 10, 15, 16) gebildet werden, die an der engsten Stelle Rechtecke sind, bei denen die kleinere Seitenlänge zwischen 1 mm und 10 mm, vorzugsweise zwischen 2 mm und 6 mm, beträgt.

29. Verfahren nach Anspruch 28,
**dadurch gekennzeichnet,**
**dass** die Sieböffnungen (7, 8, 9, 10, 15, 16) gebildet werden, die an ihrer engsten Stelle Quadrate sind, mit einer Seitenlänge zwischen 1 mm und 20 mm, vorzugsweise 2 mm und 6 mm.

30. Verfahren nach einem der voran stehenden Ansprüche,
**dadurch gekennzeichnet,**
**dass** zumindest ein Teil der Siebschichten (2, 3, 4, 5, 6), vorzugsweise die zulaufseitige Siebschicht (2), aus mindestens 2 Kreisringen (18, 19) zusammengesetzt wird, die aus einem unterschiedlichen Material bestehen.

31. Verfahren nach Anspruch 30,
**dadurch gekennzeichnet,**
**dass** der radial weiter außen liegende Kreisring (19) einen höheren Abriebwiderstand aufweist als der radial weiter innen liegende Kreisring (18).

32. Verfahren nach einem der voran stehenden Ansprüche,
**dadurch gekennzeichnet,**
**dass** Siebschichten (3, 4, 5, 6) verwendet werden, in deren Öffnungen mehrere, vorzugsweise zwischen 3 und 15 Öffnungen von der stromaufwärts benachbarten Siebschicht (2, 3, 4, 5) einmünden.

## Geänderte Patentansprüche

### Geänderte Patentansprüche gemäss Regel 137(2) EPÜ.

**1.** Verfahren zur Herstellung eines Siebes, insbesondere eines starren Siebes (1) für die Behandlung von zur Papiererzeugung geeigneten Faserstoffsuspensionen, welches aus mindestens zwei mit Öffnungen versehenen flächig miteinander verbundenen Siebschichten (2, 3, 4, 5, 6) besteht, wobei zumindest ein Teil der Öffnungen so gestaltet und angeordnet ist, dass Sieböffnungen (7, 8, 9, 10, 15, 16) entstehen, die durch alle Siebschichten (2, 3, 4, 5, 6) hindurchgehen und die Öffnungen vor dem Verbinden der Siebschichten (2, 3, 4, 5, 6) in die Siebschichten (2, 3, 4, 5, 6) eingebracht werden,
**dadurch gekennzeichnet,**
**dass** die alle Siebschichten durchdringenden Sieböffnungen (7, 8, 9, 10, 15, 16) mit nicht konstanten Strömungsquerschnitten gebildet werden und zumindest in einer der verschiedenen Siebschichten (2, 3, 4, 5, 6) Öffnungen mit langlochförmigem Querschnitt und / oder zumindest in einer der verschiedenen Siebschichten (2, 3, 4, 5, 6) Öffnungen mit polygonförmigem Querschnitt eingebracht werden.

**2.** Verfahren nach Anspruch 1,
**dadurch gekennzeichnet,**
**dass** genau drei Siebschichten (2, 3, 4) verwendet werden.

**3.** Verfahren nach Anspruch 1,
**dadurch gekennzeichnet,**
**dass** genau vier Siebschichten (2, 3, 4, 5) verwendet werden,

**4.** Verfahren nach Anspruch 1,
**dadurch gekennzeichnet,**
**dass** mehr als vier Siebschichten (2, 3, 4, 5, 6) verwendet werden.

**5.** Verfahren nach einem der vorhergehenden Ansprüche,
**dadurch gekennzeichnet,**
**dass** die Strömungsquerschnitte der Öffnungen in mindestens zwei verschiedenen Siebschichten (2, 3, 4, 5, 6) unterschiedlich groß sind.

**6.** Verfahren nach Anspruch 5,
**dadurch gekennzeichnet,**
**dass** die Öffnungen in den verschiedenen Siebschichten (3, 4, 5, 6) stromabwärts in der beabsichtigten Durchströmrichtung des Siebes gesehen größer als die jeweils stromauffwärtige Öffnung dimensioniert werden.

**7.** Verfahren nach einem der voran stehenden Ansprüche,
**dadurch gekennzeichnet,**
**dass** die einzelnen Öffnungen in verschiedenen Siebschichten (2, 3, 4, 5, 6) miteinander fluchten.

**8.** Verfahren nach einem der Ansprüche 1 bis 6,
**dadurch gekennzeichnet,**
**dass** die einzelnen Öffnungen in den verschiedenen Siebschichten (2, 3, 4, 5, 6) zumindest teilweise nicht miteinander fluchten, indem sie seitlich versetzt zueinander angeordnet sind.

**9.** Verfahren nach einem der voran stehenden Ansprüche,
**dadurch gekennzeichnet,**
**dass** in einem Teil der Siebschichten (2, 3, 4, 5, 6) zylindrische Öffnungen eingebracht werden.

**10.** Verfahren nach einem der voran stehenden Ansprüche,
**dadurch gekennzeichnet,**
**dass** zumindest in einen Teil der Siebschichten (2, 3, 4, 5, 6) konische Öffnungen eingebracht werden.

**11.** Verfahren nach einem der voran stehenden Ansprüche,
**dadurch gekennzeichnet,**
**dass** die Siebschichten (2, 3, 4, 5, 6) zumindest teilweise aus Metall hergestellt werden.

**12.** Verfahren nach einem der voran stehenden Ansprüche,
**dadurch gekennzeichnet,**
**dass** die Siebschichten (2, 3, 4, 5, 6) zumindest teilweise aus Kunststoff hergestellt werden.

**13.** Verfahren nach einem der voran stehenden Ansprüche,
**dadurch gekennzeichnet,**
**dass** verschiedene Siebschichten (2, 3, 4, 5, 6) aus verschiedenen Werkstoffen, insbesondere aus einer Kombination von Metallen und Kunststoff hergestellt werden

**14.** Verfahren nach Anspruch 13,
**dadurch gekennzeichnet,**
**dass** die zulaufseitige Siebschicht (2) aus Metall hergestellt wird.

**15.** Verfahren nach einem der voran stehenden Ansprüche,
**dadurch gekennzeichnet,**
**dass** mindestens zwei der Siebschichten (2, 3, 4, 5, 6) aus Metall hergestellt werden und dass die flächige Verbindung zwischen ihnen durch Löten erfolgt

**16.** Verfahren nach Anspruch 15,
**dadurch gekennzeichnet,**
**dass** das Lötverfahren ein Hochtemperaturlötverfahren ist, das bei einer Temperatur von über 800° C, vorzugsweise zwischen 950° C und 1250° C, durchgeführt wird.

**17.** Verfahren nach Anspruch 15 oder 16,
**dadurch gekennzeichnet,**
**dass** das Lötmittel in Form einer Folie vor dem Löten zwischen die Siebschichten eingebracht wird.

**18.** Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Schweißen erfolgt.

**19.** Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Kleben erfolg.

**20.** Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Schrauben erfolgt.

**21.** Verfahren nach einem der voran stehenden Ansprüche,
**dadurch gekennzeichnet,**
**dass** die flächige Verbindung benachbarter Siebschichten (2, 3, 4, 5, 6) zumindest teilweise durch Klemmen erfolgt.

**22.** Verfahren nach einem der voran stehenden Ansprüche,
**dadurch gekennzeichnet,**
**dass** die flächige Verbindung benachbarter Siebschichten (2, 3, 4, 5, 6) zumindest teilweise durch eine formschlüssige Verbindung erfolgt.

**23.** Verfahren nach einem der voran stehenden Ansprüche,
**dadurch gekennzeichnet,**
**dass** die einzelnen Siebschichten (2, 3, 4, 5, 8) jeweils eine Dicke zwischen 1 und 20 mm aufweisen.

**24.** Verfahren nach Anspruch 23,
**dadurch gekennzeichnet,**
**dass** die einzelnen Siebschichten (2, 3, 4, 5, 6) eine Dicke zwischen 1 und 5 mm aufweisen.

**25.** Verfahren nach einem der voran stehenden Ansprüche,
**dadurch gekennzeichnet,**
**dass** das Sieb (1) eine Gesamtdicke zwischen 4 und 100 mm, vorzugsweise 10 und 50 mm aufweist.

**26.** Verfahren nach einem der voran stehenden Anspruche,
**dadurch gekennzeichnet,**
**dass** Sieböffnungen (7, 8, 9, 10, 15, 16) gebildet werden, die an ihrer engsten Stelle kreisförmig mit einem Durchmesser zwischen 1 mm 20 mm, vorzugsweise zwischen 2 mm und 6 mm sind.

**27.** Verfahren nach einem der Anspruche 1 bis 25,
**dadurch gekennzeichnet,**
**dass** Sieböffnungen (7, 8, 9, 10, 15,16) gebildet werden, die an ihrer engsten Stelle Langlöcher sind, mit einer Weite zwischen 1 mm und 20 mm, vorzugsweise zwischen 2 mm und 8 mm.

**28.** Verfahren nach einem der Ansprüche 1 bis 25,
**dadurch gekennzeichnet**,
das Sieböffnungen (7, 8, 9, 10, 15, 16) gebildet werden, die an der engsten Stelle Rechtecke sind, bei denen die kleinere Seitenlänge zwischen 1 und 10 mm, vorzugsweise zwischen 2 mm und 6 mm, beträgt.

**29.** Verfahren nach Anspruch 28,
**dadurch gekennzeichnet,**
**dass** die Sieböffnungen (7, 8, 9, 10, 15, 16) gebildet werden, die an ihrer engsten Stelle Quadrate sind, mit einer Seitenlänge zwischen 1 mm und 20 mm, vorzugsweise 2 mm und 6 mm.

**30.** Verfahren nach einem der voran stehenden Ansprüche,
**dadurch gekennzeichnet,**
**dass** zumindest ein Teil der Siebschichten (2, 3, 4, 5, 6), vorzugsweise die zulaufseitige Siebschicht (2), aus mindestens 2 Kreisringen (18, 19) zusammengesetzt wird, die aus einem unterschiedlichen Material bestehen.

**31.** Verfahren nach Anspruch 30,
**dadurch gekennzeichnet,**
**dass** der radial weiter auβen liegende Kreisring (19) einen höheren Abriebwiderstand aufweist als der radial weiter innen liegende Kreisring (18).

**32.** Verfahren nach einem der voran stehenden Ansprüche,
**dadurch gekennzeichnet,**
**dass** Siebschichten (3, 4, 5, 6) verwendet werden, in deren Öffnungen mehrere, vorzugsweise zwischen 3 und 15 Öffnungen von der stromaufwärts benachbarten Siebschicht (2, 3, 4, 5) einmünden.
